# EUROPEAN PATENT APPLICATION

(11) **EP 2 868 990 A1**
(43) Date of publication of application: **06.05.2015**
(21) Application number: 14190665.1
(22) Date of filing: 28.10.2014
(51) Int. Cl.: F24F 11/00, G05D 23/19

(54) **Air conditioner and control method of the same**

(30) Priority: 29.10.2013 KR 20130129459
(71) Applicant: LG Electronics Inc., Yeongdeungpo-gu Seoul 150-721 (KR)
(72) Inventor: Kim, Gunhyoung, 642-711 Gyeongsangnam-do (KR)
(74) Representative: Vossius & Partner Patentanwälte Rechtsanwälte mbB

(57) **Abstract**

An air conditioner includes: an air conditioning unit (2) that changes the room temperature setting; an infrared sensor (4) that detects the movement of a human body; and a controller (5) that sets the air conditioning unit (2) to run at a reference temperature (T1) for a set period of time (t1) if the value of physical activity data detected by the infrared sensor (4) for the set period of time (t1) is below a reference value, and sets the air conditioning unit (2) to a new reference value (T2), which is higher than the reference value (T1) by a set amount. The air conditioner has the advantages of setting the air conditioning unit (2) to run at a reference temperature (T1) for a set period of time (t1), obtaining more accurate physical activity data, and controlling the air conditioning unit (2) according to the obtained accurate physical activity data. A control method of an air conditioner is also claimed.

## Description

### BACKGROUND OF THE INVENTION

### 1.Field of the Invention

The present invention relates to an air conditioner and a control method of the same, and more particularly, to an air conditioner which operates variably according to the amount of physical activity, and a control method of the same.

### 2. Discussion of the Related Art

In general, an air conditioner is an apparatus for cooling/heating an indoor space using a compressor, a condenser, an expansion mechanism, and an evaporator.

In line with the recent trend, a human body sensory mechanism for detecting the presence or absence of a human body or the location of the human body is installed in an air conditioner to control it according to the detection result of the human body sensory mechanism.

An infrared sensor may be used as the human body sensory mechanism. The air conditioner is able to expel cool air or hot air in the direction of a human body sensed by the infrared sensor.

However, adjusting the indoor temperature without waiting for sufficient time after detecting the amount of physical activity may lead to problems like making too frequent changes during air conditioner control while there is no accurate physical activity data and causing the room temperature setting to change too quickly.

### SUMMARY OF THE INVENTION

In order to overcome the above-described problems, an aspect of the present invention provides an air conditioner which can obtain more accurate physical activity data and is subject to control according to the obtained accurate physical activity data, and a control method of the same.

An exemplary embodiment of the present invention provides an air conditioner including: an air conditioning unit that changes the room temperature setting; an infrared sensor that detects the movement of a human body; and a controller that sets the air conditioning unit to run at a reference temperature for a set period of time if the value of physical activity data detected by the infrared sensor for the set period of time is below a reference value, and sets the air conditioning unit to a new reference value, which is higher than the reference value by a set amount.

If the value of the physical activity data is above or equal to the reference value, the controller may set the air conditioning unit to run at the reference temperature.

The controller may include: a sub PCB that determines the value of physical activity data in response to a signal from the infrared sensor; and a main PCB that controls the air conditioning unit according to the value determined by the sub PCB.

The reference temperature may be a desired temperature.

The controller may change the new reference temperature setting over time at least twice.

The controller may gradually increase the new reference temperature setting over time by a set amount.

If the value of physical activity data detected by the infrared sensor for a second set period of time, which is longer than the set period of time, is equal to a second reference value, which is lower than the reference value, the controller may set the air conditioning unit to an upper temperature limit, which is higher than the new reference temperature.

The controller may set the air conditioning unit to a lower air flow limit when setting the air conditioning unit to the upper temperature limit,

The second reference value may be a reference value that applies when the physical activity data detection rate for the second set period of time is 0%.

Another exemplary embodiment of the present invention provides a control method of an air conditioner including: a temperature maintaining step for analyzing physical activity data detected by an infrared sensor while keeping an air conditioning unit running at a reference temperature for a set period of time; and a temperature elevation step for setting the air conditioning unit to a new reference temperature, which is higher than the reference temperature by a set amount, if the value of the physical activity data detected during the temperature maintaining step is below a reference value.

Yet another exemplary embodiment of the present invention provides a control method of an air conditioner including: a temperature lowering step for setting the air conditioning unit to lower the room temperature to the reference temperature; a temperature maintaining step for analyzing physical activity data detected by an infrared sensor while keeping an air conditioning unit running at a reference temperature for a set period of time; and a temperature elevation step for setting the air conditioning unit to a new reference temperature, which is higher than the reference temperature by a set amount, if the value of the physical activity data detected during the temperature maintaining step is below a reference value.

The reference temperature may be a desired temperature.

The temperature maintaining step and the temperature elevation step may be repeated over time.

Repeating the temperature maintaining step and the temperature elevation step twice may gradually increase the new temperature setting by a set amount.

The control method of the air conditioner may further include an upper limit control step for setting the air conditioning unit to an upper temperature limit, which is higher than the new reference temperature, if the value of physical activity data detected by the infrared sensor for a second set period of time, which is longer than the set period of time, is equal to a second reference value, which is lower than the reference value.

The upper limit control step may be implemented when the temperature maintaining step and the temperature elevation step are implemented at least once.

In the upper limit control step, the air conditioning unit may be set to a lower air flow limit when setting the air conditioning unit to the upper temperature limit.

The second reference value may be a reference value that applies when the physical activity data detection rate for the second set period of time is 0%.

The thus-configured air conditioner according to the present invention has the advantages of setting the air conditioning unit to run at a reference temperature for a set period of time, obtaining more accurate physical activity data, and controlling the air conditioning unit according to the obtained accurate physical activity data.

Furthermore, the air conditioner according to the present invention has the advantage of preventing making too frequent changes during air conditioner control.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a view showing an air conditioner according to an exemplary embodiment of the present invention;
FIG. 2 is a control block diagram of an air conditioner according to an exemplary embodiment of the present invention; and
FIG. 3 is a view showing temperature changes occurring in a control method of an air conditioner according to an exemplary embodiment of the present invention.

### DETAILED DESCRIPTION OF THE PREFERRED EMBODIMENTS

Hereinafter, an air conditioner according to an exemplary embodiment of the present invention will be described in detail with reference to the accompanying drawings.

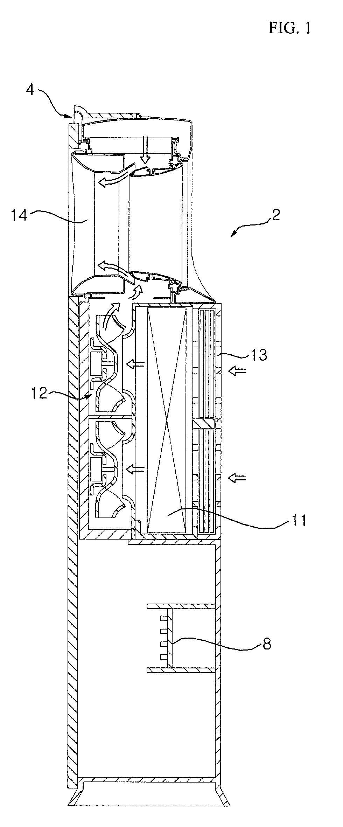

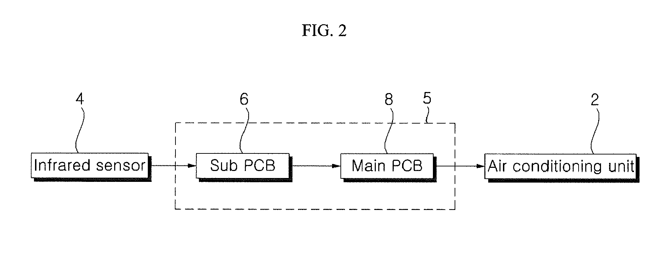

FIG. 1 is a view showing an air conditioner according to an exemplary embodiment of the present invention. FIG. 2 is a control block diagram of an air conditioner according to an exemplary embodiment of the present invention.

The air conditioner includes an air conditioning unit 2 that changes the room temperature setting; an infrared sensor 4 that detects the movement of a human body; and a controller 5 that controls the air conditioning unit 2 in response to a signal output from the infrared sensor 4.

The air conditioning unit 2 may include a compressor, an outdoor heat exchanger, an expansion mechanism, and an indoor heat exchanger 11 through which a refrigerant circulates. The air conditioning unit 2 may adjust the temperature of the air expelled from the air conditioning unit 2 by controlling the compressor, either alone or together with the expansion mechanism. The air conditioning unit 2 may adjust the temperature of the air coming in and out of the air conditioning unit 2 by turning on or off the compressor or varying the frequency input into the compressor when controlling the compressor. The air conditioning unit 2 may draw in air from a room, heat-exchange the indoor air in the indoor heat exchanger 11, and then expel it to the room, and the air in the room may rise or fall while circulating through the air conditioning unit 2 and the room. The indoor heat exchanger 11 for air exchange may be installed in the air conditioning unit 2. An air blower 12 for moving the air in the room to the indoor heat exchanger 11 and then blowing it out to the room may be installed in the air conditioning unit 2. An air inlet 13 for allowing air to be drawn into the air conditioning unit may be formed in the air conditioning unit 2. An air outlet 14 for allowing the air heat-exchanged by the indoor heat exchanger 11 to be drawn out of the air conditioning unit 2 may be formed in the air conditioning unit 2. The air conditioning unit 2 may receive operation commands through an input unit (not shown) such as a remote controller or a control panel installed at the indoor conditioning unit 2. When a desired temperature is input into the input unit, the air conditioning unit 2 may be set to keep the room at the desired temperature input through the input unit.

The infrared sensor 4 is a device that detects the physical or chemical quantity of temperature, pressure, radiation strength, etc by using infrared rays, and converts it into an electric quantity for signal processing. The infrared sensor 4 may detect the movement of a human body at predetermined intervals. The infrared sensor 4 may detect the movement of a human body at predetermined intervals of 5 seconds, 10 seconds, 15 seconds, etc, for example. The infrared sensor 4 may detect changes in infrared light within a detection range. While the infrared sensor 4 detects no human body movement unless it is detected within the detection range, the infrared sensor 4 detects the movement of a human body if it is detected within the detection range. The infrared sensor 4 may output sensed information, that is, information as to whether there is a human body movement or not, to the controller 5. The infrared sensor 4 may be installed at the air conditioning unit 2 and detect the room where the air conditioning unit 2 is installed. If the air conditioning unit 2 includes an indoor unit and an outdoor unit, the infrared sensor 4 may be installed at the indoor unit and detect any human body in the room where the indoor unit is installed while being installed at the indoor unit. The infrared sensor 4 may detect the presence or absence of a human body, the location of the human body, the distance between the human body and the air conditioning unit 2, whether the human body moves or not, etc while scanning the room where the air conditioning unit 2 is installed. The infrared sensor 4 may detect the movement of a human body at predetermined intervals and output it to the controller 5. The infrared sensor 4 may be installed at the air conditioning unit 2 to be rotatable or to be lifted up and down. A single infrared sensor 4 or multiple infrared sensors 4 may be installed at the air conditioning unit 2.

The controller 5 may include a sub PCB 6 that determines the value of physical activity data in response to a signal from the infrared sensor 4 and a main PCB 8 that controls the air conditioning unit 2 according to the value determined by the sub PCB 6. The sub PCB 6 may be a human body detector that detects the movement of a human body, and the main PCB 8 may be an air conditioning unit controller that controls the air conditioning unit 2. The controller 5 may be installed within the air conditioning unit 2.

Upon receiving input of a command for operating the air conditioner, the controller 5 may set the air conditioning unit 2 to allow the room to reach a reference temperature. The reference temperature may be a target temperature the air conditioning unit 2 wants to keep under control, ranging between 18°C and 26°C for cooling. The air conditioning unit 2 may be set to keep the room temperature between a lower reference temperature limit (reference temperature - error) and an upper reference temperature limit (reference temperature + error), with a margin of error of 0.5°C or 1 °C, for example, for the reference temperature. For example, when the reference temperature is 22°C, the air conditioning unit 2 may be set to keep the room temperature between the lower reference temperature limit of 21.5°C and the upper reference temperature limit of 22.5°C. For another example, when the reference temperature is 22°C, the air conditioning unit 2 may be set to keep the room temperature between the lower reference temperature limit of 21°C and the upper reference temperature limit of 23°C. If a command for operating the air conditioner and a desired temperature are input through the input unit, the desired temperature may be set as the reference temperature. If a command for operating the air conditioner is input through the input unit and no desired temperature is input, a preset specific temperature may be set as the reference temperature.

The controller 5 may set the air conditioning unit 2 to run at the reference temperature for a set period of time. When the room reaches the reference temperature, the controller 5 may set the air conditioning unit 2 to run at the reference temperature for a set period of time. Preferably, the set period of time should be long enough to collect physical activity data, for example, 10, 20, or 30 minutes.

The air conditioner may be set to use a desired temperature as the reference temperature for a set period of time after start-up and change the reference temperature setting after the lapse of the set period of time. That is, the air conditioning unit 2 can run at the reference temperature for a set period of time after starting up the air conditioner, and the air conditioning unit 2 can run at a different reference temperature after the lapse of the set period of time. The air conditioner can be set to change the reference temperature setting before the lapse of the set period of time. In this case, however, a person in the room may feel too hot or too cold because of this quick change in the reference temperature setting. That is, it is preferable that the air conditioner collects physical activity data while running at the reference temperature for the set period of time and changes the reference temperature setting according to the physical activity data detected by the infrared sensor 4 after the lapse of the set period of time.

If the value of the physical activity data detected by the infrared sensor 4 is below a reference value for a set period of time, the controller 5 may set the air conditioning unit 2 to a new reference temperature, which is higher than the existing reference temperature by a set amount.

Physical activity data is data regarding the amount of physical activity detected for a set period of time. For example, when the infrared sensor 4 detects the movement of a human body at intervals of 5 seconds, physical activity data may represent the number of how many times the infrared sensor 4 detects the movement of a human body for a set period of time.

The reference value may represent the number of movements which is deemed not large enough. The reference value may be a specified value such as 100, 160, 180, 200, etc.

For example, assuming that the set period of time is 20 minutes, the infrared sensor 4 detects a human body at reference intervals of 5 seconds, and the reference value is 180, if the total number of movements of the human body detected at 5-second intervals for a set period of 20 minutes is below 180, the value of the physical activity data detected by the infrared sensor 4 may be considered below the reference value, and the controller 5 may set the air conditioning unit 2 to a new reference temperature, which is higher than the existing reference temperature by a set amount.

Physical activity data and reference value may be determined by, but not limited to, the above-described method, and other various methods may be employed. For example, the movement of a human body is detected at 5-second intervals for a set period of 20 minutes and the average number of movements per minute for the set period of time is compared with a reference value (e.g., 8). If the average number of movements per minute is below the reference value, the air conditioning unit 2 may be set to a new reference temperature, which is higher than the existing reference temperature by a set amount.

The set amount may be an amount by which the temperature of the room where the air conditioning unit 2 is installed increases when the amount of physical activity is small. The set amount may be 0.5°C, 1°C, 2°C, etc. For example, when the reference temperature to be maintained for a set period of time is 22°C and the set amount is 1 °C, the air conditioning unit 2 is set to run at the reference temperature of 22°C for the set period of time. Afterwards, if the value of the physical activity data detected for the set period of time is below the reference value, the air conditioning unit 2 may be set to a new reference temperature of 23°C, which is the sum of the existing reference temperature (22°C) and the set amount (1°C), and run at the new reference temperature of 23°C.

If the value of the physical activity data is above or equal to the reference value, the controller 5 may set the air conditioning unit 2 to run at a reference temperature T1. If the value of the physical activity data is above or equal to the reference value, the controller 5 determines that a human body in the room is active in its movement and keeps the air conditioning unit 2 running at the existing reference temperature.

The controller 5 may change new reference temperature settings T2 and T3 over time at least twice. The controller 5 may gradually increase the new reference temperature settings T2 and T3 over time by a set amount.

The controller 5 sets the air conditioning unit 2 to run at the reference temperature T1 for a first set period of time. Afterwards, if the value of physical activity data detected for the first set period of time is below the reference value, the air conditioning unit 2 may be set to a first reference temperature T2, which is the sum of the reference temperature T1 for the first set period of time and the set amount. The controller 5 may set the air conditioning unit 2 to the first reference temperature T2 and then keep it running at the first reference temperature T2 for a second set period of time. The controller 5 sets the air conditioning unit 2 to run at the first reference temperature T1 for the second set period of time. Afterwards, if the value of physical activity data detected for the second set period of time is below the reference value, the air conditioning unit 2 may be set to a second reference temperature T3, which is the sum of the first reference temperature T2 for the second set period of time and the set amount.

For example, assuming that the reference temperature T1 for the first set period of time is 22°C, the set amount is 1 °C, and the first and second set periods of time are 20 minutes, respectively, the controller 5 may set the air conditioning unit 2 to run at the reference temperature T1 of 22°C for the initial 20 minutes. If the value of physical activity data detected for the initial 20 minutes is below the reference value, the first reference temperature may be set to 23°C and the air conditioning unit 2 may be set to run at the first reference temperature of 23 °C. The room temperature may rise for the first set period of time, and the controller 5 may set the air conditioning unit 2 to the first reference temperature of 23°C. The controller 5 may set the air conditioning unit 2 to run at the first reference temperature T1 of 23°C for another 20 minutes. If the value of physical activity data for this another 20 minutes is below the reference value, the second reference temperature may be set to 24°C and the air conditioning unit 2 may be set to run at the second reference temperature of 24°C.

Preferably, the controller 5 maintains the reference temperature for a set period of time and changes the reference temperature setting twice or more after the lapse of the set period of time, and the maximum number of temperature changes is limited to a set value.

Preferably, the controller 5 maintains the reference temperature for a set period of time and changes the reference temperature setting only a set number of times after the lapse of the set period of time, and the maximum number of temperature changes is limited to a specified value such as 2, 3, or 4.

Changing the reference temperature setting at least once after the lapse of the set period of time enables the controller 5 to determine the presence or absence of a human body and control the air conditioning unit 2 according to the determination result.

If the value of physical activity data detected by the infrared sensor 4 for a second set period of time t2, which is longer than the set period of time, is equal to a second reference value, which is lower than the reference value, the controller 5 may set the air conditioning unit 2 to an upper temperature limit T4, which is higher than the new reference temperature.

The second set period of time t2 is a time period set to detect the presence or absence of a human body in the room where the air conditioning unit 2 is installed, and is preferably longer than the set period of time. The second set period of time may be 2, 3, 4, 5, 8, 10, etc times longer than the set period of time. For example, when the set period of time is 20 minutes, the second set period of time may be 1 hour.

The second reference value may be equal to or below 10 or equal to 0 when the reference value is 180, and the second reference value may be equal to or below 2 or equal to 0 when the reference value is 8. Preferably, the second reference value is 0. Preferably, the second reference value is a reference value that applies when the physical activity data detection rate for the second set period of time is 0%.

If the infrared sensor 4 does not detect the amount of physical activity at all, this means that no physical activity data is detected at all. The air conditioning unit 2 may be set to run at the upper temperature limit T4 after the lapse of the second set period of time.

The upper temperature limit T4 is a temperature that applies when there is no human body in the room where the air conditioning unit 2 is installed. Preferably, the upper temperature limit T4 is set higher than the sum of the reference temperature for the initial operation of the air conditioner and the set amount multiplied by 2 or 3. When the reference temperature is 22°C and the set amount is 1 °C, the upper temperature limit T4 may be set higher than 24°C or 25°C, for example, 28°C. After the lapse of the second set period of time, the air conditioning unit 2 may be controlled within a margin of error for the upper temperature limit T4. For example, when the upper temperature limit T4 is 28°C, the air conditioning unit 2 may be set to keep the room temperature within the range of 27.5°C to 28.5°C or within the range of 27°C to 29°C.

The controller 5 may set the air conditioning unit 2 to a lower air flow limit when setting the air conditioning unit 2 to the upper temperature limit. When the air flow of the air conditioner can be set to strong, moderate, or weak, the controller 5 may set the air conditioning unit 2 to the upper temperature limit and the weak air flow. The lower air flow limit can be set lower than a typical air flow range of the air conditioning unit 2, and is not limited to the weak airflow setting on the air conditioning unit 2.

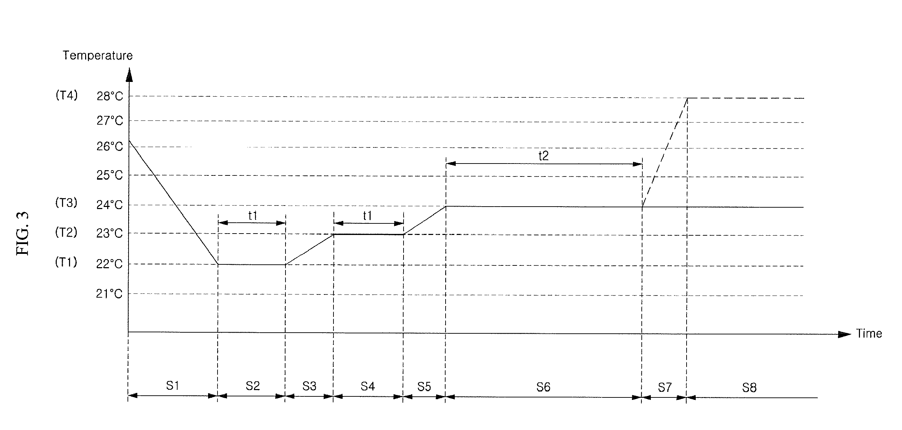

FIG. 3 is a view showing temperature changes occurring in a control method of an air conditioner according to an exemplary embodiment of the present invention.

The control method of the air conditioner according to this exemplary embodiment of the present invention may include a temperature lowering step S1 for setting the air conditioning unit 2 to lower the room temperature to the reference temperature.

The temperature lowering step S1 is a step for setting the air conditioning unit 2 to allow the room to reach the reference temperature during operation of the air conditioner. The air conditioning unit 2 may cool the room down during the temperature lowering step S1. The air conditioner may supply a low-temperature refrigerant, cooler than the room temperature, to the indoor heat exchanger 11. The indoor air may be cooled down by the indoor heat exchanger 11 and then supplied to the room. During the temperature lowering step S1, the room temperature may gradually decrease and reach the reference temperature. During the temperature lowering step S1, the air conditioning unit 2 may be set to keep the room temperature between a lower reference temperature limit (reference temperature - error) and an upper reference temperature limit (reference temperature + error), with a margin of error of 0.5°C or 1°C, for example, for the reference temperature. In the control method of the air conditioner, the reference temperature may be a desired temperature. When the user inputs a command for operating the air conditioner and a desired temperature, the air conditioning unit 2 may expel low-temperature air to the room to make the room temperature reach the desired temperature. For example, when the room temperature is 26°C and the reference temperature (desired temperature) is 22°C, the air conditioning unit 2 may be set to allow the room to reach a point between the upper and lower limits of the reference temperature of 22°C.

The control method of the air conditioner may include a temperature maintaining step S2 and a temperature elevation step S3, which is implemented after the temperature maintaining step S2.

The temperature maintaining step S2 may be a step for analyzing physical activity data detected by the infrared sensor 4 while keeping the air conditioning unit 2 running at the reference temperature T1 for a set period of time.

The temperature elevation step S3 is implemented after the temperature maintaining step S2, and may be a step for setting the air conditioning unit 2 to a new reference temperature, which is higher than the reference temperature for the temperature maintaining step S2 by a set amount, if the value of the physical activity data detected during the temperature maintaining step S2 is below a reference value.

In the control method of the air conditioner, the temperature elevation step S3 is implemented after the temperature maintaining step S2. The temperature maintaining step S2 may be initiated upon completion of the temperature maintaining step S 1. That is, when the temperature of the room cooled by the air conditioning unit 2 reaches the reference temperature in the temperature maintaining step S1, the temperature maintaining step S2 may be implemented for a set period of time after the room reaches the reference temperature.

In the control method of the air conditioner, the temperature maintaining step S2 may be implemented regardless of the temperature lowering step S1. The temperature maintaining step S2 may be implemented for a set period of time after a specific operating condition for the air conditioner is met or a specific command is input through an input unit. The specific operating condition may involve sequentially implementing the temperature maintaining step S2 and the temperature elevation step S3. The specific command input through the input unit may be a command for sequentially implementing the temperature maintaining step S2 and the temperature elevation step S3.

In the temperature maintaining step S2, the air conditioning unit 2 may be set to keep the room temperature between the lower reference temperature limit and the upper reference temperature limit for a set period of time t1. The infrared sensor 4 may detect the amount of physical activity for the set period of time t1 and output it to the controller 5 in the temperature maintaining step S2, and the controller 5 may determine the value of physical activity data in response to a signal output from the infrared sensor 4. In the temperature maintaining step S2, the controller 5 may collect physical activity data for the set period of time t1 during the temperature maintaining step S2.

The controller 5 may determine whether to implement the temperature elevation step S3 or not, based on the physical activity data collected for the set period of time t1. If the value of the physical activity data collected during the temperature maintaining step S2 is below the reference value, the controller 5 may set the air conditioning unit 2 to a new reference temperature, which is higher than the reference temperature by the set amount. In the control method of the air conditioner, the temperature maintaining step S2 may be completed after the lapse of the set period of time t1 since the temperature maintaining step S1 is initiated, and the temperature elevation step S3 may be initiated if the value of the physical activity data collected for the set period of time t1 during the temperature maintaining step S2 is below the reference value.

The temperature elevation step S3 is a step for raising the room temperature to a new reference temperature, which is higher than that for the temperature-maintaining step S3 by the set amount. For example, when the reference temperature for the temperature maintaining step S2 is 22°C, the new reference temperature for the temperature elevation step S3 may be 23°C. That is, the air conditioning unit 2 may be set to allow the room to reach the new reference temperature. The temperature elevation step S3 may be completed when the room temperature reaches a point between the upper and lower limits of the new reference temperature.

In the control method of the air conditioner, the temperature maintaining step and the temperature elevation step may be repeated over time. Repeating the temperature maintaining step and the temperature elevation step twice may gradually increase the new temperature setting by a set amount. For example, when the initial reference temperature is 22°C, the new reference temperature may be 23°C if the temperature elevation step is implemented once and 24°C if the temperature elevation step is implemented twice.

After sequentially implementing the temperature maintaining step and the temperature elevation step once, a temperature maintaining step S4 for setting the air conditioning unit 2 to maintain the new reference temperature may be implemented. That is, the temperature maintaining step S4 can be implemented after the temperature elevation step S3 is implemented once. The temperature maintaining step S4, which is implemented after the temperature elevation step S3 is implemented once, may be done to keep the room at the new reference temperature T2 in the same manner as the initial temperature maintaining step S2, except that the reference temperatures for these steps are different. For example, when the reference temperature for the initial temperature maintaining step S2 is 22°C, the reference temperature for the temperature maintaining step S4, which is implemented after the temperature elevation step S3 is implemented once, may be 23 °C. The temperature maintaining step S4 may be done for the same set period of time t1 as the initial temperature maintaining step S2.

In the control method of the air conditioner, a temperature elevation step S5 may be implemented, or an upper limit control step S6, S7, and S8 may be implemented.

In the control method of the air conditioner, if the value of physical activity data collected in the temperature maintaining step S4 implemented after the temperature elevation step S3 is below the reference value and above a second reference value (second reference value < reference value), the upper limit control step S6, S7, and S8 is not implemented immediately, but instead the temperature elevation step S5 is implemented. The temperature elevation step S5 may be initiated upon completion of the temperature maintaining step S4 for maintaining the new reference temperature T2. That is, the temperature elevation step S5 may be initiated after the lapse of the set period of time t1 since the temperature maintaining step S4, which is implemented immediately before the temperature elevation step S5.

On the other hand, if the value of the physical activity data collected during the temperature maintaining step S4 implemented after the temperature elevation step S3 is equal to the second reference value, which is lower than the reference value, the temperature elevation step S5 is not implemented, but instead the upper limit control step S6, S7, and S8 is implemented. The upper limit control steps S6, S7, and S8 will be described later.

For convenience of explanation, the initial temperature maintaining step S2 is referred to as the first temperature maintaining step S2, the initial temperature maintaining step S3 is referred to as the first temperature elevation step S3, the subsequent temperature maintaining step S4 is referred to as the second temperature maintaining step S4, and the subsequent temperature elevation step S5 is referred to as the second temperature elevation step S5. The second temperature elevation step S5 is a step for keeping the room temperature to a new reference temperature T3, which is higher than the reference temperature T2 for the temperature maintaining step S4 by a set amount. For example, if the reference temperature for the second temperature maintaining step S4 is 23°C, the second temperature elevation step S4 may be implemented to change the reference temperature setting to 24°C and set the air conditioning unit 2 to allow the room to reach 24°C.

In the control method of the air conditioner, when the room temperature reaches a new reference temperature after the initiation of the second temperature elevation step S5, the second temperature elevation step S4 may be completed and the temperature maintaining step may be resumed.

The upper limit control step S6, S7, and S8 may be a step for setting the air conditioning unit 2 to an upper temperature limit T4, which is higher than the new reference temperature, if the value of physical activity data detected by the infrared sensor 4 for a second set period of time t2, which is longer than the set period of time, is equal to a second reference value, which is lower than the reference value.

The second set period of time t2 may be 2, 3, 4, 5, 8, 10, etc times longer than the set period of time t1 for the temperature maintaining steps S2 and S4.

The second reference value is a reference value that applies when the physical activity data detection rate for the second set period of time is 0%.

The upper limit control step S6, S7, and S8 may be a step for setting the air conditioning unit 2 to the upper temperature limit T4, which is higher than the new reference temperature, unless the infrared sensor 4 detects no human body movement for the second set period of time t2. The upper limit control step S6, S7, and S8 may be a kind of member control step for perceiving a human body in the room as a member and controlling the air conditioning unit 2 according to this perception.

The upper temperature limit T4 is a temperature that applies when there is no human body in the room where the air conditioning unit 2 is installed. Preferably, the upper temperature limit T4 is set higher than the sum of the reference temperature for the initial operation of the air conditioner and the set amount multiplied by 2 or 3.

The upper limit control step S6, S7, and S8 may be implemented when the temperature maintaining step and the temperature elevation step are implemented at least once. In the upper limit control step S6, S7, and S8, the air conditioning unit 2 may be set to a lower air flow limit when setting the air conditioning unit 2 to the upper temperature limit T4.

In the control method of the air conditioner, when the detection rate of the infrared sensor 4 for the second set period of time t2 after the first temperature elevation step S3 is 0%, the second temperature elevation step S5 is not implemented, but instead the upper limit control step S6, S7, and S8 is implemented. On the other hand, when the detection rate of the infrared sensor 4 for the second set period of time t2 after the second temperature elevation step S5 is 0%, a third temperature elevation step (not shown) is not implemented, but instead the upper limit control step S6, S7, and S8 is implemented. That is, when no human body movement is detected for the second set period of time t2 after the first temperature elevation step S3, the upper limit control step S6, S7, and S8 is implemented. On the other hand, when no human body movement is detected for the second set period of time t2 after the second temperature elevation step S5, the upper limit control step S6, S7, and S8 is implemented.

The upper limit control step S6, S7, and S8 may include a temperature maintaining process S6 for maintaining the reference temperature for the previous temperature maintaining step for the second period of time t2 and a temperature elevation process S7 for setting the air conditioning unit 2 to allow the room to reach the upper temperature limit T4, if no physical activity data is detected at all for the second set period of time t2. The upper limit control step S6, S7, and S8 may further include a temperature maintaining process S8 for setting the air conditioning unit 2 to allow the room to maintain the upper temperature limit T4.

In the upper limit control step S6, S7, and S8, once the temperature maintaining process S8 is initiated, the temperature maintaining process S8 may continue before input of a new command such as "stop".

## Claims

1. An air conditioner comprising:
an air conditioning unit (2) configured to change the room temperature setting; an infrared sensor (4) adapted to detect the movement of a human body; and
a controller (5) that is configured: to set the air conditioning unit to run without a reference temperature for a set period of time; and, if a value of physical activity data detected by the infrared sensor for the set period of time is below a reference value, to set the air conditioning unit to a new reference temperature, which is higher than the reference temperature by a set amount.

2. The air conditioner of claim 1, wherein the controller (5) is configured to, if the value of the physical activity data is above or equal to the reference temperature, set the air conditioning unit (2) to maintain the reference temperature.

3. The air conditioner of claim 1 or 2, wherein the controller (5) is configured to sequentially, at least twice, change the reference temperature setting over time.

4. The air conditioner of claim 3 wherein the controller (5) is configured to gradually increase the reference temperature setting over time by a set amount.

5. The air conditioner of any one of claims 1 to 4, wherein the controller (5) is configured to, if the value of physical activity data for a second set period of time, longer than said set period of time, is equal to a second reference value, lower than said reference value, set the air conditioning unit to an upper temperature limit, which is higher than the new reference temperature.

6. The air conditioner of claim 5, wherein the controller (5) is configured to set the air conditioning unit to a lower air flow limit when setting the air conditioning unit to the upper temperature limit.

7. The air conditioner of claim 5, wherein the second reference value is a reference value that applies when the physical activity data detection rate for the second set period of time is 0%.

8. A control method of an air conditioner comprising:
a temperature maintaining step for analyzing physical activity data detected by an infrared sensor (4) while keeping an air conditioning unit (2) running at a reference temperature for a set period of time; and
a temperature elevation step for, if the value of the physical activity data detected during the temperature maintaining step is below a reference value, setting the air conditioning unit (2) to a new reference temperature, which is higher than the reference temperature by a set amount.

9. The control method of claim 8, wherein the reference temperature is a target temperature.

10. The control method of claim 8 or 9, wherein the temperature maintaining step and the temperature elevation step are repeated over time.

11. The control method of claim 10, wherein the reference temperature is gradually increased by a set amount by repeating the temperature maintaining step and the temperature elevation step twice.

12. The control method of any one of claims 8 to 11, further comprising: an upper limit control step for, if the value of physical activity data detected by the infrared sensor for a second set period of time, longer than said set period of time, is equal to a second reference value, lower than the reference value, setting the air conditioning unit to an upper temperature limit, which is higher than the new reference temperature.

13. The control method of claim 12, wherein the upper limit control step is performed when the temperature maintaining step and the temperature elevation step are performed at least once.

14. The control method of claim 12 or 13, wherein, when setting the air conditioning unit to the upper temperature limit in the upper limit control step, the air conditioning unit (2) is set to a lower air flow limit.

15. The control method of any one of claims 12 to 14, wherein the second reference value is a reference value that applies when the physical activity data detection rate for the second set period of time is 0%.
